# EUROPEAN PATENT APPLICATION

(11) **EP 4 611 108 A1**
(43) Date of publication of application: **03.09.2025**
(21) Application number: 24879289.7
(22) Date of filing: 24.10.2024
(51) Int. Cl.: H01M 10/0587, H01M 50/586, H01M 50/595, H01M 50/531, H01M 50/107

(54) **ELECTRODE ASSEMBLY AND SECONDARY BATTERY COMPRISING SAME**

(30) Priority: 20.10.2023 KR 20230140875
(71) Applicant: LG Energy Solution, Ltd., Seoul 07335 (KR)
(72) Inventor: HONG, Sangho, Daejeon 34122 (KR); KIM, Namwon, Daejeon 34122 (KR); KIM, Jung Hoon, Daejeon 34122 (KR)
(74) Representative: Goddar, Heinz J.
(86) International application number: PCT/IB2024/060456
(87) International publication number: WO 2025/083667

(57) **Abstract**

An electrode assembly includes a jelly-roll structure in which a negative electrode, a separator, and a positive electrode are wound around a core. The negative electrode includes an active material portion in which a negative electrode active material is laminated on one or both sides of a negative electrode current collector, and a negative electrode non-coated portion in which the negative electrode active material is not laminated. The negative electrode further includes a protective tape covering at least a part of the negative electrode non-coated portion adjacent to the core. The protective tape has a cross-sectional area of 0.3 mm² to 0.47 mm² in a longitudinal direction of the negative electrode. Also provided is a secondary battery including such an electrode assembly.

## Description

### [CROSS-REFERENCE TO RELATED APPLICATIONS]

This application is a national phase entry under 35 U.S.C. § 371 of International Application No. PCT/IB2024/060456 filed October 24, 2024, which claims priority to Korean Patent Application No. 10-2023-0140875, filed on October 20, 2023, the disclosures of which are incorporated herein in their entirety by reference.

### [TECHNICAL FIELD]

The present disclosure relates to an electrode assembly and secondary battery including the same.

### [BACKGROUND]

In general, a secondary battery is a battery that can be charged and discharged, unlike a primary battery that cannot be recharged. Such secondary batteries are widely used in advanced electronic devices such as phones, laptop computers, and camcorders.

Secondary batteries can be tested for stability by measuring internal short circuits by compressing one side with a presser to ensure stability.

Secondary batteries are classified into cylindrical and square batteries in which the electrode assembly is built into a cylindrical or square metal battery case, and pouch-type batteries in which the electrode assembly is built into a pouch-type battery case made of aluminum laminate sheet depending on the shape of the battery case.

In addition, an electrode assembly built into a battery case is a power generation element capable of charging and discharging, which is composed of a stacked structure of positive electrode/separator/negative electrode, and is classified into a folding electrode assembly (jelly roll) in which a long sheet-shaped negative electrode and positive electrode coated with an active material are wound with a separator interposed therebetween, and a stacked electrode assembly in which a number of negative electrodes and positive electrodes of a predetermined size are sequentially stacked with a separator interposed therebetween. Among these, the jelly roll has the advantages of being easy to manufacture and having a high energy density per weight.

In addition, the part where an electrode tab is welded to an electrode plate in a secondary battery is the part where dissimilar metals are connected, and thus the internal resistance (IR) increases and heat is concentrated. Therefore, a protective tape is attached to the part where the electrode tab is disposed to protect the part where the electrode plate and the electrode tab are electrically connected.

In a conventional jelly roll-type electrode assembly, the core at the center has an empty structure regardless of whether the outer diameter is large or small, and due to this empty structure, the electrode adhesion of the negative electrode and positive electrode in the core decreases.

Since the protective tape attached to the electrode tab corresponds to a part of the core, the protective tape does not support the core, and thus the conventional electrode assembly has no support part and has low adhesion. Accordingly, the electrode reaction ratio of the core is relatively low, and there is a problem that the possibility of core collapse, and the like increase when the core deteriorates.

### (Prior Art Document)

(Patent Document 1) Korean Publication No. 10-2023-0086616

### [TECHNICAL PROBLEMS]

In view of the problems of the above-mentioned prior art, the present disclosure provides an electrode assembly that prevents core collapse and a secondary battery including the same.

### [TECHNICAL SOLUTION]

One aspect of the present disclosure provides an electrode assembly having a jelly-roll structure in which a negative electrode, a separator, and a positive electrode are wound around a core, wherein the negative electrode comprises an active material portion in which a negative electrode active material is laminated on one or both sides of a negative electrode current collector, and a negative electrode non-coated portion in which the negative electrode active material is not laminated, the negative electrode comprises a protective tape extending in the longitudinal direction of the negative electrode from the negative electrode non-coated portion adjacent to the core, and the protective tape has a cross-sectional area of 0.3 mm² to 0.47 mm² in a longitudinal direction of the negative electrode.

One aspect of the present disclosure provides a secondary battery including the electrode assembly, a battery case having a space for accommodating the electrode assembly and an electrolyte and including an opening with at least one side open, and a cap assembly coupled to the opening.

### [EFFECT OF INVENTION]

The electrode assembly and the secondary battery including the same according to an aspect of the present disclosure can prevent the core from collapsing by controlling the length and thickness of the protective tape to support the core, thereby improving the safety of the secondary battery.

### [BRIEF DESCRIPTION OF THE DRAWING]

FIG. 1 is a cross-sectional view of an end part of an electrode assembly according to an aspect of the present disclosure before the electrode assembly is wound.
FIG. 2 is a cross-sectional view of the end part before a negative electrode is wound according to another aspect of the present disclosure.
FIG. 3 is a CT image showing results of evaluating core collapses according to Examples 1 and 2 and Comparative Examples 1 and 2 of the present disclosure.
FIG. 4 illustrates a method of evaluating whether a core separator of a jelly-roll type electrode assembly according to an aspect of the present disclosure is damaged.
FIG. 5 is a cross-sectional view showing a secondary battery according to an aspect of the present disclosure.
FIG. 6 is a perspective view showing a battery pack including the secondary battery according to an aspect of the present disclosure.
FIG. 7 is a perspective view showing a means of transportation including the battery pack according to an aspect of the present disclosure.

### [DETAILED DESCRIPTION]

The detailed description of the present disclosure is intended to fully explain the present disclosure to those skilled in the art. Throughout the specification, when a part is said to "include" a certain component or "features" a certain structure and shape, this does not mean that other components are excluded or other structures and shapes are excluded, but rather that other components, structures, and shapes can be included unless specifically stated otherwise.

The present disclosure can be modified in various manners and has various aspects, and thus specific aspects are presented and described in detail in the detailed description. However, this is not intended to limit the content of the disclosure to the aspects, and it should be understood that all modifications, equivalents, or substitutes included in the spirit and technical scope of the present disclosure are included.

The present disclosure will be described in detail below with reference to the drawings. However, the drawings are intended to illustrate the present disclosure and the scope of the present disclosure is not limited by the drawings.

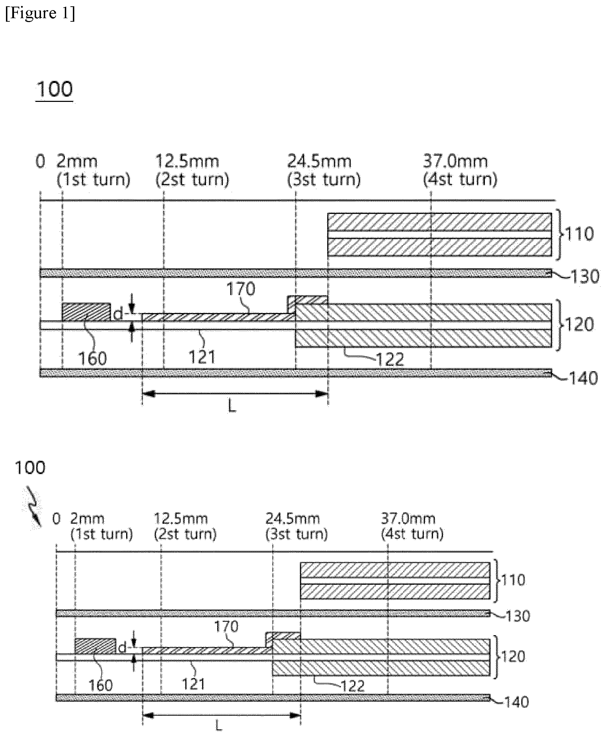

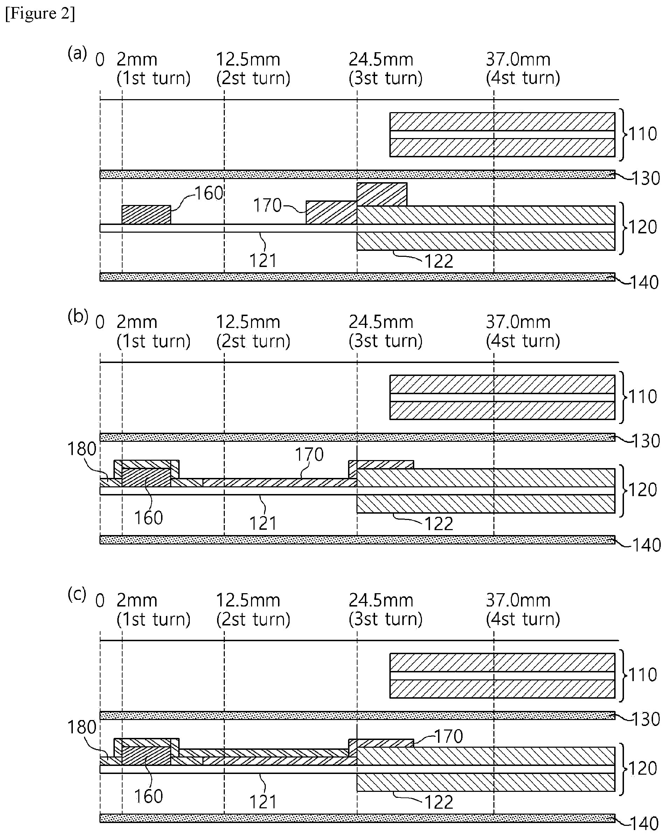

As shown in FIGs. 1 and 2, an electrode assembly 100 includes a positive electrode 110, a negative electrode 120, and separators 130 and 140 positioned between the positive electrode 110 and the negative electrodes 120, and is a power generation element capable of charging and discharging.

The electrode assembly 100 may include a jelly-roll structure in which the first separator 130, the negative electrode 120, the second separator 140, and the positive electrode 110 are sequentially laminated and wound to form a core C.

The "core" of the electrode assembly 100 according to the present disclosure is a region including a hollow located on the winding shaft of the electrode assembly 100 and a part of the laminated structure of the wound first separator 130/negative electrode 120/second separator 140/positive electrode 110 and may mean a region within two turns of the positive electrode 110 from one end of the positive electrode 110 in the length direction of the positive electrode 110 located at the innermost side of the electrode assembly 100. In addition, "one turn" may mean a length required for 360° winding of an electrode or separator included in the electrode assembly 100 from a reference point, and may be determined by the outer diameter of the winding core used for winding of the electrode assembly 100, the thickness of an electrode or separator, and the number of turns of an electrode or separator located inside. For example, one turn of the positive electrode may mean a length required to wind the positive electrode 360° in the direction in which the jelly-roll type electrode assembly is wound from the end of the positive electrode 110 in the longitudinal direction.

In an aspect, the first turn of the negative electrode, that is, the length at which the negative electrode 120 is first wound around the core C, may be 10.5 mm, the second turn may be 12 mm, and the third turn may be 12.5 mm.

The positive electrode 110 may include a positive electrode current collector, a positive electrode active material portion, and a positive electrode non-coated portion. The positive electrode current collector may include a metal thin plate having excellent conductivity, for example, aluminum (Al) foil.

The positive electrode 110 is formed by coating a positive electrode active material on at least one of both sides of the positive electrode current collector, a region where the positive electrode active material is coated is a positive electrode active material portion, and a region where the positive electrode active material is not coated is a positive electrode non-coated portion. The positive electrode non-coated portion can be bonded to a first electrode tab, that is, a positive electrode tab since the positive electrode active material is not applied thereto.

The positive electrode active material may include lithium cobalt oxide having high operating voltage and excellent capacity characteristics, lithium nickel oxide having high reversible capacity and easy implementation of a large-capacity battery, lithium nickel cobalt oxide in which some of nickel is replaced with cobalt, lithium nickel cobalt metal oxide in which some of nickel is replaced with manganese, cobalt or aluminum, lithium manganese oxide having excellent thermal stability and low cost, lithium iron phosphorous oxide having excellent stability, etc.

The negative electrode 120 may include a negative electrode current collector, a negative electrode active material portion, and a negative electrode non-coated portion. The negative electrode current collector may include a metal thin plate having excellent conductivity, for example, copper (Cu) or nickel (Ni) foil.

The negative electrode 120 is formed by coating a negative electrode active material on one side or both sides of the negative electrode current collector, the negative electrode active material portion is formed by coating or applying a negative electrode active material, and the negative electrode non-coated portion is a region where the negative electrode active material is not coated or applied and the negative electrode current collector is exposed. The negative electrode non-coated portion can be bonded to a second electrode tab, that is, a negative electrode tab 160 since the negative electrode active material is not applied thereto.

The negative electrode active material may be, for example, a carbon material such as crystalline carbon, amorphous carbon, a carbon composite, or carbon fiber, lithium metal, or a lithium alloy. The negative electrode active material may further include, for example, non-graphite SiO₂ (silica) or SiC (silicon carbide) for high-capacity design.

The separators 130 and 140 prevent internal short circuits that may occur when the positive electrode 110 and the negative electrode 120 come into contact with each other, and may include a porous material to facilitate movement of ions between the electrodes.

In an aspect, the separators 130 and 140 may include a substrate layer made of a porous material. The substrate layer may include, for example, one selected from the group consisting of polyethylene (PE), polystyrene (PS), polypropylene (PP), and a copolymer of polyethylene (PE) and polypropylene (PP).

In another aspect, the separators 130 and 140 may include a safety reinforced separator (SRS). That is, the separators 130 and 140 may include the substrate layer made of a porous material and a coating layer formed by coating a mixed slurry of inorganic particles and a binder polymer on the substrate layer. Preferably, the coating layer includes ceramic particles and has a uniform pore structure formed by the interstitial volume between the ceramic particles, which are active layer components in addition to a pore structure included in the separator substrate.

The coating layer may include ceramic particles including at least one selected from the group consisting of alumina, silica, TiO₂, SiC, and MgAl₂O₄. By including such a coating layer, the safety of the electrode assembly can be reinforced. In addition, the coating layer may further include a lithium salt.

The positive electrode tab and the negative electrode tab 160 can be protruded in opposite directions with respect to the electrode assembly 100 of the jelly-roll structure to transfer electrons collected in the current collectors to an external circuit.

The negative electrode 120 may have a protective tape 170 positioned on one side of the negative electrode current collector or the negative electrode non-coated portion 121 where the negative electrode tab 160 is positioned. The protective tape 170 may wrap around the starting end of the negative electrode tab 160 or the negative electrode active material portion 122.

Specifically, in the negative electrode 120, the negative electrode non-coated portion 121 and the negative electrode active material portion 122 may be positioned in order from the core C, and the negative electrode tab 160 may be positioned on one surface of the negative electrode non-coated portion 121. In an aspect, the negative electrode tab 160 may be fixed to the negative electrode non-coated portion 121 by welding.

In addition, the negative electrode non-coated portion 121 may be wound around the core C by two turns, and the negative electrode active material portion 122 may be wound around the core C from the third turn.

The protective tape 170 is attached to wrap the outer surface of the welded portion of the negative electrode tab 160 and the negative electrode non-coated portion 121. Therefore, the protective tape 170 prevents the separators 130 and 140 from being damaged by the portion where the negative electrode tab 160 protrudes from the negative electrode non-coated portion 121.

Alternatively, the protective tape 170 may wrap one end of the negative electrode active material portion 122 adjacent to the core C between two ends facing each other in the longitudinal direction of the negative electrode active material portion 122, thereby preventing the separators from being damaged by a step between the negative electrode non-coated portion 121 and the negative electrode active material portion 122 due to expansion of the volume of the negative electrode active material portion 122.

In addition, the area of the protective tape 170 according to the present disclosure satisfies the aforementioned range in the cross-sectional area of the negative electrode in the longitudinal direction of the negative electrode, that is, in the cross-section perpendicular to the winding shaft of the electrode assembly 100, and thus not only the separators 130 and 140 but also the protective tape 170 having a predetermined length L and thickness d can be wound around the core C to support the core C.

Preferably, the cross-sectional area of the protective tape 170 may be 0.37 mm² to 0.47 mm². The ratio of the thickness to the length of the protective tape 170 may be 0.015:9 to 0.08:20, and more preferably, 0.02:9 to 0.05:17.

According to the present disclosure, the thickness of the protective tape 170 may decrease when the length of the protective tape 170 increases and the thickness may increase when the length decreases within the aforementioned range.

For example, if the length of the protective tape 170 is 17 mm and the thickness thereof is 0.022 mm, the cross-sectional area of the protective tape 170 may be 0.374 mm². If the length of the protective tape 170 is 11 mm at the same cross-sectional area, the thickness may increase to 0.034 mm.

When the negative electrode non-coated portion 121 and the negative electrode active material portion 122 are positioned in order from the core C in the negative electrode 120 according to the present disclosure, the attachment position of the protective tape 170 is not limited as long as the cross-sectional area and the length-to-thickness ratio of the protective tape 170 satisfy the aforementioned ranges, but preferably, the protective tape 170 may be positioned at a position covering the end of the negative electrode active material portion 122 adjacent to the core C. That is, the protective tape 170 according to the present disclosure can be positioned on both one side of the negative electrode non-coated portion 121 and one side of the negative electrode active material portion 122(FIG. 2(a)). In addition, the protective tape 170 may cover the entirety or part of the negative electrode non-coated portion 121 and cover the negative electrode active material portion 122 only a certain length in the longitudinal direction from the end.

For example, the protective tape 170 may be attached from one end of the negative electrode active material portion 122 to a position corresponding to the tip of an end of the positive electrode 110.

Alternatively, the protective tape 170 may be positioned on one side of the negative electrode active material portion 122 and the length thereof may be 5 mm to 50 mm.

Preferably, the protective tape 170 may be unattached to the negative electrode tab 160. In other words, the protective tape 170 may extend from the negative electrode non-coated portion 121 between the negative electrode tab 160 and the negative electrode active material portion 122 to one side of the negative electrode active material portion 122.

As the secondary battery 1 is charged/discharged, the positive electrode 110 and the negative electrode 120 expand in the region where the positive electrode active material portion and the negative electrode active material portion 122 face each other in the electrode assembly 100. Due to the expansion of the positive electrode 110 and the negative electrode 120, the positive electrode 110 and the negative electrode 120 slide toward the core C, causing core impingement to occur.

The protective tape 170 according to the present disclosure extends from the negative electrode non-coated portion 121 to one side of the negative electrode active material portion 122, in other words, extends adjacent to the portion where the positive electrode active material portion and the negative electrode active material portion 122 face each other, thereby increasing the rigidity of the negative electrode facing the positive electrode active material portion, which causes core impingement, and preventing the positive electrode 110 and the negative electrode 120 from sliding to prevent core impingement and improve the safety of the secondary battery 1.

In another aspect, the negative electrode 120 may further include an auxiliary tape 180(FIG. 2(b)).

That is, the negative electrode 120 according to another aspect includes the protective tape 170 and the auxiliary tape 180, and the protective tape 170 is positioned adjacent to the portion where the positive electrode active material portion and the negative electrode active material portion 122 face each other and is unattached to the negative electrode tab 160 such that the auxiliary tape 180 is attached to the negative electrode tab 160 to completely cover the negative electrode tab 160 and fix the negative electrode tab 160 to the negative electrode non-coated portion 121.

In addition, the area or thickness of the protective tape 170 and the auxiliary tape 180 laminated on the negative electrode non-coated portion 121 wound on the core C is increased, and thus the shape of the core C is supported and the strength thereof is increased by the negative electrode non-coated portion 121, the separators 130 and 140, the protective tape 170, and the auxiliary tape 180, thereby preventing core collapse and core deformation.

The front side of the negative electrode non-coated portion 121 may be covered by at least one of the protective tape 170 and the auxiliary tape 180. In an aspect, one end of the protective tape 170 and one end of the auxiliary tape 180 are positioned in contact with the other, and the sum of the width of the protective tape 170 and the width of the auxiliary tape 180 may be equal to the width of the negative electrode non-coated portion 121.

Alternatively, the protective tape 170 and the auxiliary tape 180 may overlap to cover the front side of the negative electrode non-coated portion 121(FIG. 2(c)). In this case, the sum of the width of the protective tape 170 and the width of the auxiliary tape 180 may be wider than the width of the negative electrode non-coated portion 121.

Here, the width of the protective tape 170, the width of the auxiliary tape 180, and the width of the negative electrode non-coated portion 121 mean the products of the lengths and widths of the protective tape 170, the auxiliary tape 180, and the negative electrode non-coated portion 121.

Therefore, since the protective tape 170 and the auxiliary tape 180 are positioned on the negative electrode non-coated portion 121 in the electrode assembly 100 according to the present disclosure, the step between the negative electrode non-coated portion 121 and the negative electrode active material portion 122 is reduced, thereby reducing the influence of the step due to the end of the positive electrode during charging and discharging of the secondary battery 1 and preventing short circuit.

The protective tape 170 and the auxiliary tape 180 may be made of any one selected from the group consisting of polyethylene terephthalate (PET), polypropylene (PP), polyester (PE), polycarbonate (PC), polyimide (PI), polyethylene naphthalate (PEN), polyether ether ketone (PEEK), polyarylate (PAR), polycycloolefin (PCO), polynorbornene, polyether sulfone (PES), and cycloolefin polymer (COP).

The protective tape 170 and the auxiliary tape 180 may contain the same material, or may have different materials. Preferably, the material forming the protective tape 170 and the material forming the auxiliary tape 180 may be different. For example, the protective tape 170 may be made of PI, and the auxiliary tape 180 may be made of PET.

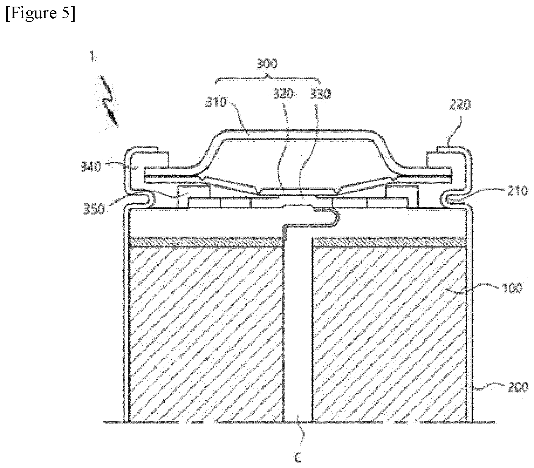

The secondary battery 1 may include the electrode assembly 100 described above. Specifically, as shown in FIG. 5, the secondary battery 1 may include a battery case 200 having a space in which the electrode assembly 100 and an electrolyte are accommodated and having an opened surface, and a cap assembly 300 coupled to the opened surface of the battery case.

The battery case 200 may be provided as a pillar structure having a space formed inside. The battery case 200 may accommodate the electrode assembly 100 including electrodes and separators, and an electrolyte (not shown) in the internal spacef. The battery case 200 may have a structure in which one side is open (hereinafter, "opening") and the other side is sealed. Here, one side and the other side of the battery case 200 mean upper and lower ends positioned in the direction of gravity or along the central axis of the battery case 200.

The opened upper side of the battery case 200 may be provided with a beading part 210 folded toward the center of the secondary battery 1. In addition, the battery case 200 may be provided with a crimping part 220 on the upper side of the beading part 210. That is, the crimping part 220 may be positioned at the top of the battery case 200. Here, the upper part means an area in the direction of the opening from the center of the battery case 200.

The battery case 200 may be made of a lightweight conductive metal material such as aluminum or an aluminum alloy, or may be made of a nickel-plated steel plate material. Preferably, the battery case 200 may be made of a nickel-plated steel plate material.

The cap assembly 300 may be coupled to the opened surface of the battery case 200 and may include a top cap 310, a safety vent 320, and a current interruptive device 330.

The top cap 310 may be positioned at the top of the cap assembly 300 and may protrude in a direction opposite to the center of the battery case 200. The top cap 310 may serve as an electrode terminal such that the protruding portion is electrically connected to the outside, and for example, the top cap 310 may serve as a positive electrode terminal.

The edge of the top cap 310 may be combined with a sealing gasket 340, and the sealing gasket 340 may be positioned inside the crimping part 220 of the battery case 200. The sealing gasket 340 can increase the sealing ability between the top cap 310 and the battery case 200.

The top cap 310 may include a protrusion protruding upward, a rim contacting and combining with the sealing gasket 340, and a first connecting portion connecting the protrusion and the rim.

The safety vent 320 is positioned under the top cap 310 and may be electrically connected to the top cap 310. At least a portion of the surface of the safety vent 320 facing the top cap 310 may be in contact with the top cap 310. A portion of the safety vent 320 corresponding to a predetermined length from an end may be in contact with the top cap 310, and the remaining portion may be positioned at a predetermined distance from the top cap 310. In addition, the portion of the safety vent 320 in contact with the top cap 310 may be combined with the sealing gasket 340.

The distance between the safety vent 320 and the top cap 310 may increase as it moves toward the center of the safety vent 320 from the area in contact with the top cap 310.

The safety vent 320 may include a contact portion that comes into contact with the top cap 310, a central portion that is located at the center of the safety vent 320 and comes into contact with the current interruptive device, and a second connection portion that connects the contact portion and the central portion. In addition, the safety vent 320 may include a bent portion (or notch) at a portion where the contact portion and the second connection portion are connected, and a portion where the second connection portion and the central portion are connected.

In an aspect, the end portions of the safety vent 320 may be perpendicular to the axial direction of the battery case 200. In this case, the top cap 310 may have end portions perpendicular to the axial direction of the battery case 200 like the safety vent 320. That is, the safety vent 320 and the top cap 310 may be positioned horizontally.

In another aspect, the end portions of the safety vent 320 may be bent and wrap around the outer surface of the top cap 310.

In the secondary battery 1 according to the present disclosure, gas is generated or heat is generated as the electrode assembly 100 and the electrolyte accommodated in the battery case 200 react with each other, thereby increasing the internal pressure.

The safety vent 320 is forced toward the top cap 310 when the pressure inside the secondary battery 1 increases, and the gas inside the secondary battery 1 is discharged as the bent portion ruptures.

The current interruptive device (CID) 330 is positioned below the safety vent 320, and at least a part thereof may be connected to the safety vent 320.

The current interruptive device 330 is separated from the safety vent 320 and interrupts the current when the safety vent 320 ruptures as the pressure inside the secondary battery 1 increases.

More specifically, the current interruptive device 330 may include a central portion connected to the safety vent 320, a connection portion protruding to the safety vent 320, an edge portion excluding the connection portion, and a coupling portion connecting the connection portion and the edge portion. A plurality of coupling portions may be provided and positioned to be spaced apart from each other.

When the safety vent 320 is deformed in the direction in which the top cap 310 is positioned, the coupling portion is broken and thus the connection portion can be separated from the edge portion. That is, the connection portion is separated toward the top cap 310 while being connected to the safety vent 320.

A CID gasket 350 wraps around the edges of the current interruptive devicet 330, and can electrically separate the edge portion and the coupling portion of the current interruptive device 330 other than the connection portion from the safety vent 320.

According to an aspect of the present disclosure, a battery pack 3 including the secondary battery 1 described above is provided.

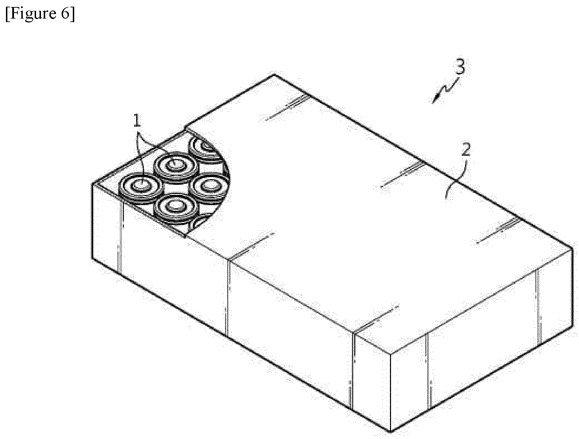

In relation to the above aspect, referring to FIG. 6, a battery pack 3 including the secondary battery 1 in a pack housing 2 is illustrated.

The battery pack according to the above aspect has high output power/high capacity.

According to an aspect of the present disclosure, a means of transportation including the above-described battery pack is provided.

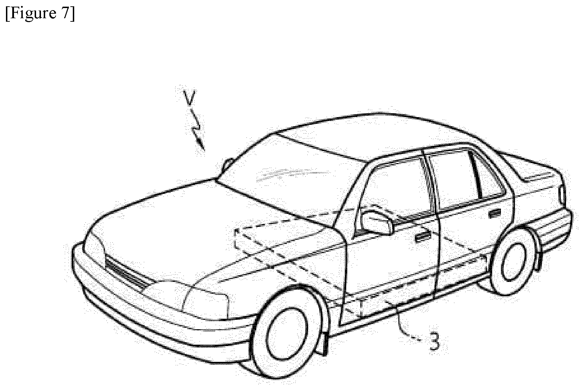

In relation to the above aspect, referring to FIG. 7, a means of transportation V including the battery pack 3 is illustrated.

The means of transportation according to the above aspect uses the battery pack having high output power/high capacity, and thus is excellent in terms of stability and safety.

### [EXAMPLES]

### Example 1

### Manufacture of Electrode Assembly

As a positive electrode current collector, an Al foil having a thickness of 15 µm and a widthwise length of 63.9 mm was prepared, and a positive electrode active material slurry containing an Ni-Mn-Co-Al (NMCA) complex having a Ni content of 92% or more as a positive electrode active material and CNT as a conductive material was coated on the positive electrode current collector and dried to form a positive electrode active material portion, thereby manufacturing a positive electrode having a thickness of 154 µm.

Next, a Cu foil having a thickness of 10 µm and a widthwise length of 64.9 mm was prepared as a negative electrode current collector, and a negative electrode active material slurry containing 50 weight parts of artificial graphite and natural graphite as negative electrode active materials was coated on the negative electrode current collector and dried to form a negative electrode active material portion, thereby manufacturing a negative electrode having a thickness of 141 µm.

Then, a protective tape having a thickness of 22 µm, a length of 17 mm, a width of 63.5 mm, and containing PI was attached to one side of the negative electrode material portion in the direction in which the negative electrode tab was positioned.

Meanwhile, two separators were prepared, each having a coating layer containing Al₂O₃ as an inorganic component, a PVdF-based binder as a binder component, and a lithium salt and formed on one side of a sheet-type polyethylene substrate layer as the first separator and the second separator.

### Manufacture of Secondary Battery

After inserting the jelly-roll-type electrode assembly into a cylindrical battery case, an electrolyte solution containing 15 wt% of LiPF6 and dissolved by mixing ethylene carbonate (EC): dimethyl carbonate (DMC): ethyl methyl carbonate (EMC) in a weight ratio of 4:9:3 was injected thereinto, and the cylindrical battery case was sealed with a cap assembly to manufacture a secondary battery.

### Example 2

A jelly-roll type electrode assembly and a secondary battery were manufactured in the same manner as in Example 1, except that a protective tape having a thickness of 50 µm and a length of 9 mm was attached to the negative electrode active material portion and the negative electrode non-coated portion.

### Comparative Example 1

A jelly-roll type electrode assembly and a secondary battery were manufactured in the same manner as in Example 1, except that a protective tape having a thickness of 22 µm and a length of 9 mm was attached to the negative electrode tab.

### Comparative Example 2

A jelly-roll type electrode assembly and a secondary battery were manufactured in the same manner as in Example 1, except that a protective tape having a thickness of 30 µm and a length of 16 mm was attached to the negative electrode tab.

### Experimental Example - Core Impingement Evaluation

### Cycle Stability Evaluation

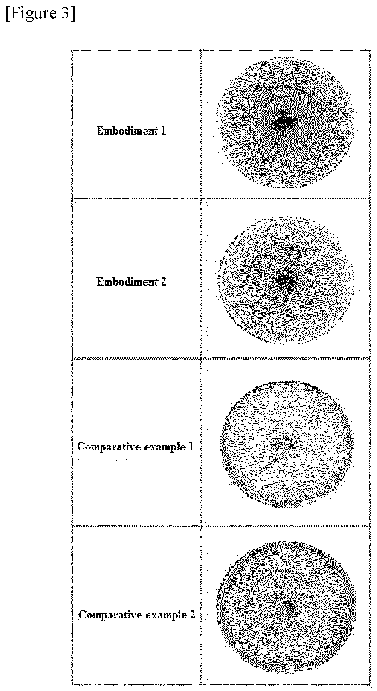

Secondary batteries were prepared by activating the secondary batteries manufactured in Examples 1 and 2 and Comparative Examples 1 and 2 by performing 2 cycles of 4.2 V-2.5 V, 0.2 C charge, and 0.2 C discharge. Thereafter, the activated secondary batteries were subjected to 400 cycles under the conditions of 4.25 V (0.3 C)-2.85 V (0.5 C), @55°C, and the core was subjected to computed tomography (CT) to check core impingement, thereby evaluating the long-term cycle stability, and images of the results are shown in FIG. 3.

### Core Impingement Evaluation

The occurrence of core impingement in the secondary batteries of Examples 1 and 2 and Comparative Examples 1 and 2 was evaluated by the following method.

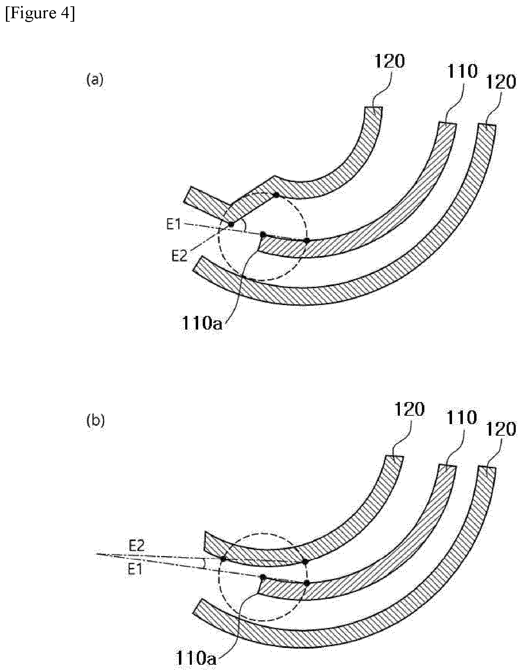

FIG. 4 schematically illustrates a method of evaluating whether or not core impingement occurs. Specifically, part (a) of FIG. 4 schematically illustrates a method of evaluating whether or not core impingement occurs when deformation occurs in the negative electrode, and part (b) of FIG. 4 schematically illustrates a method of evaluating whether or not core impingement occurs when deformation does not occur in the negative electrode.
1) On the first surface of the positive electrode, a straight line connecting a longitudinal end 110a of the positive electrode 110 and a point 5 mm apart from the end is extended to draw a first extension line E1.

### 2-1) When deformation occurs in negative electrode

In the core of the jelly-roll type electrode assembly, on the surface of the negative electrode 120 facing the first surface of the positive electrode 110, a straight line connecting two points at which bending directions change within a distance of 5 mm from the longitudinal end of the positive electrode 110 is extended to draw a second extension line E2.

### 2-2) When no deformation occurs in negative electrode

In the core of the jelly-roll type electrode assembly, on the surface of the negative electrode 120 facing the first surface of the positive electrode 110, a straight line connecting two points 5 mm apart from the longitudinal end of the positive electrode 110 is extended to draw the second extension line E2.

3) When the angle from the first extension line E1 to the second extension line E2 in the counterclockwise direction, based on the intersection of the first extension line E1 and the second extension line E2, exceeds 25°, it is evaluated that core impingement has occurred.

Referring to FIG. 3, it can be confirmed that the secondary batteries manufactured in Examples 1 and 2 have improved core impingement compared to Comparative Examples 1 and 2 in the cycle safety evaluation.

Specifically, the cross-sectional areas of the protective tapes in Examples 1 and 2 and Comparative Examples 1 and 2 are 0.374 mm², 0.45 mm², 0.198 mm², and 0.48 mm².

It can be ascertained that core impingement has been improved in Examples 1 and 2 in which the cross-sectional areas of the protective tapes satisfy the range of 0.37 mm² to 0.47 mm², compared to Comparative Examples 1 and 2.

Furthermore, when comparing Example 2 and Comparative Example 1 in which the protective tapes have the same length and different thicknesses, it can be confirmed that core impingement has been improved in Example 2 having a thicker protective tape, compared to Comparative Example 1.

When the protective tape is attached to a certain width, the rigidity of the core of the jelly-roll type structure is improved, and thus core collapse and core impingement can be improved.

Further, comparing Example 1 and Example 2, it can be ascertained that core impingement has been improved in Example 1 having a smaller cross-sectional area and a longer length of the protective tape, compared to Example 2 having a larger cross-sectional area and a shorter length of the protective tape.

That is, even if the protective tape satisfies the range of 0.37 mm² to 0.47 mm² in cross-sectional area, the longer the bonding length of the protective tape with respect to the negative electrode non-coated portion, the longer the length supporting the core, improving core deformation.

The present disclosure has been described with reference to preferred examples as described above, but is not limited to the above examples, and various changes and modifications may be made by those skilled in the art within the scope that does not depart from the spirit of the present disclosure.

### [DESCRIPTION OF REFERENCE NUMERALS]

1: secondary battery
2: pack housing
3: battery pack
100: electrode assembly
110: positive electrode
120: negative electrode
121: negative electrode non-coated portion
122: negative electrode active material portion
130, 140: Separator
160: negative electrode tab
170: protective tape
180: auxiliary tape
200: battery case
210: beading part
220: crimping part
300: cap assembly
310: top cap
320: safety vent
330: current interruptive device
340: sealing gasket
350: CID gasket
V: vehicle
C: core

### [INDUSTRIAL APPLICABILITY]

The electrode assembly and the secondary battery including the same according to an aspect of the present disclosure can improve the safety of the secondary battery by controlling the length and thickness of the protective tape to support the core, thereby preventing the core from collapsing.

## Claims

1. An electrode assembly, comprising:
a jelly-roll structure in which a negative electrode, a separator, and a positive electrode are wound around a core,
wherein the negative electrode comprises an active material portion in which a negative electrode active material is laminated on one or both sides of a negative electrode current collector, and a negative electrode non-coated portion in which the negative electrode active material is not laminated,
wherein the negative electrode further comprises a protective tape covering at least a part of the negative electrode non-coated portion adjacent to the core, and
wherein the protective tape has a cross-sectional area ranging from 0.3 mm² to 0.47 mm² in a longitudinal direction of the negative electrode.

2. The electrode assembly of claim 1, wherein a ratio of a thickness to a length of the cross-sectional area of the protective tape in the longitudinal direction of the negative electrode ranges from 0.015:9 to 0.08:20.

3. The electrode assembly of claim 1, wherein the protective tape covers an end of the negative electrode active material portion adjacent to the core.

4. The electrode assembly of claim 1, wherein the negative electrode non-coated portion is positioned at an end of the negative electrode adjacent to the core, a negative electrode tab is laminated on one side of the negative electrode non-coated portion, and the protective tape is not attached to the negative electrode tab.

5. The electrode assembly of claim 4, further comprising an auxiliary tape attached to the negative electrode tab.

6. The electrode assembly of claim 5, wherein a front surface of the negative electrode non-coated portion is covered with at least one of the protective tape and the auxiliary tape.

7. The electrode assembly of claim 5, wherein the protective tape and the auxiliary tape overlap.

8. The electrode assembly of claim 5, wherein the protective tape and the auxiliary tape are different materials.

9. The electrode assembly of claim 1, wherein the protective tape is one selected from the group consisting of polyethylene terephthalate, polypropylene, polyester, polycarbonate, polyimide, polyethylene naphthalene, polyheteretherketone, polyacrylate, polycycloolefin, polynorbornene, polyethersulfone, and cycloolefin polymers.

10. A secondary battery, comprising:
the electrode assembly of claim 1;
a battery case having a space for accommodating the electrode assembly and an electrolyte and including an opening with at least one side open; and
a cap assembly coupled to the opening.
